# EUROPÄISCHE PATENTANMELDUNG

(11) **EP 0 834 428 A1**
(43) Veröffentlichungstag der Anmeldung: **08.04.1998**
(21) Anmeldenummer: 97116369.6
(22) Anmeldetag: 19.09.1997
(51) Int. Cl.: B60R 21/20

(54) **Gassack-Rückhaltemodul**

(30) Priorität: 07.10.1996 DE 29617421 U
(71) Anmelder: TRW Occupant Restraint Systems GmbH, 73551 Alfdorf (DE)
(72) Erfinder: Dannenhauer, Reiner, 73642 Welzheim (DE); Lutz, Joachim, 73579 Schechingen (DE)
(74) Vertreter: Degwert, Hartmut, Dipl.-Phys.

(57) **Zusammenfassung**

Ein für verschiedene Einbausituationen im Fahrzeug geeigneter Gassack-Rückhaltemodul weist zwei gleiche Gasgeneratoren (12, 14) auf, die an einem Wandungsteil eines allgemein kastenförmigen Gehäuses (10) angeordnet und befestigt sind. Der die Einblasöffnung des Gassacks berandende Befestigungsabschnitt (16a) des Gassacks (16) ist mittels eines Befestigungsrahmens (18), der in einen umlaufenden Kanal (22) am Gehäuse (10) eingesetzt ist, an das Gehäuse angebunden.

## Beschreibung

Die Erfindung betrifft einen Gassack-Rückhaltemodul mit einem Gehäuse, einer Aufblasvorrichtung, die nach Aktivierung ein Druckgasvolumen bereitstellt, sowie einen gefalteten Gassack, der einen an dem Gehäuse festgelegten, eine Einblasöffnung umgebenden Befestigungsabschnitt aufweist.

Gassack-Rückhaltemodul sind dem Fachmann auf dem Gebiet der Fahrzeuginsassen-Sicherheitstechnik in zahlreichen Ausführungen bekannt. Es besteht jedoch noch ein Bedarf für ein flexibel an verschiedene Einbausituationen im Fahrzeug anzupassendes Konzept, das mit geringem Aufwand verwirklicht werden kann und sich durch geringes Gewicht sowie Bauvolumen auszeichnet.

Gemäß der Erfindung weist die Aufblasvorrichtung zwei zumindest weitgehend gleiche Gasgeneratoren auf; diese Gasgeneratoren sind an einem Wandungsteil des allgemein kastenförmigen Gehäuses angeordnet und befestigt; ferner ist der Befestigungsabschnitt des Gassacks mittels eines Befestigungsrahmens, der in einen umlaufenden Kanal am Gehäuse eingesetzt ist, an das Gehäuse angebunden. Durch dieses Konzept können die Einbaumaße des Moduls leicht variiert und an die jeweiligen Einbausituationen angepaßt werden. So können die Gasgeneratoren nebeneinander oder auch einander gegenüberliegend angeordnet werden. Die Anbindung des Gassacks an das Gehäuse kann in einer zur Befestigungsebene der Gasgeneratoren parallelen Ebene oder auch in einer dazu quer orientierten Ebene erfolgen. Zwar wird die vorgeschlagene Art der Anbindung des Gassacks an das Gehäuse mittels eines Befestigungsrahmens und eines entsprechenden Kanals am Gehäuse mit einer relativ komplexen Gehäuseform erkauft, jedoch bereitet dessen Fertigung keinerlei Schwierigkeiten, da eine Spritzgußtechnik Anwendung finden kann. Insbesondere können sowohl das Gehäuse als auch der Befestigungsrahmen aus Kunststoff in Spritzgußtechnik hergestellt werden, vorzugsweise aus glasfaserverstärktem Kunststoff. Besonders vorteilhaft ist die Verwendung von Polyamid 6 mit einer Glasfaserverstärkung in einem Anteil von 30 bis 40 Gew.-%.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine schematische Perspektivansicht der Bestandteile einer ersten Ausführungsform des Gassack-Rückhaltemoduls in verschiedenen Ansichten;
Fig. 2 einen Querschnitt, der die Anbindung des Gassacks an ein Gehäuse mittels eines Befestigungsrahmens erkennen läßt;
Fig. 3 eine auseinandergezogene Perspektivansicht einer weiteren Ausführungsform; und
Fig. 4 eine auseinandergezogene Perspektivansicht einer weiteren Ausführungsvariante.

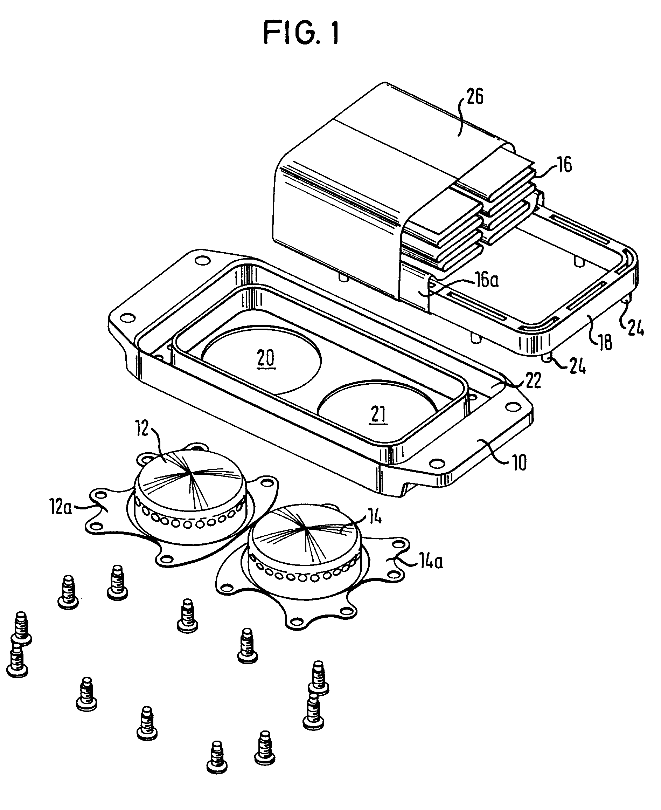

Wie in Fig. 1 zu erkennen ist, besteht der Gassack-Rückhaltemodul aus einem Gehäuse 10, zwei daran angesetzten Gasgeneratoren 12, 14 und einem im Ruhezustand gefalteten Gassack 16, der mittels eines Befestigungsrahmens 18 an das Gehäuse 10 angebunden ist. Die Gasgeneratoren 12, 14 sind jeweils mittels eines Flansches 12a bzw. 14a von außen an den Boden des Gehäuses 10 angesetzt und ragen durch Öffnungen 20, 21 in diesem in den Innenraum des Gehäuses 10 hinein. Das Gehäuse 10 ist mit einem umlaufenden Kanal 22 versehen, in den der Befestigungsrahmen passend einsetzbar ist. Ein Randstreifen 16a des Gassacks 16 ist um den Befestigungsrahmen 18 umgeschlagen und mit Öffnungen versehen, die von Befestigungszapfen 24 durchdrungen werden, die vom Befestigungsrahmen 18 abragen und in entsprechende Löcher am Boden des Kanals 22 eingesetzt werden. Eine Abdeckung 26 umgibt den zusammengefalteten Gassack 16 mit Befestigungsrahmen 18.

Das Gehäuse 10 mit den Gasgeneratoren 12, 14 bildet eine erste, eigenständige Baugruppe, und der zusammengefaltete Gassack 16 mit Befestigungsrahmen 18 und Abdeckung 26 bildet eine zweite Baugruppe, die mit der ersten leicht zusammengefügt werden kann.

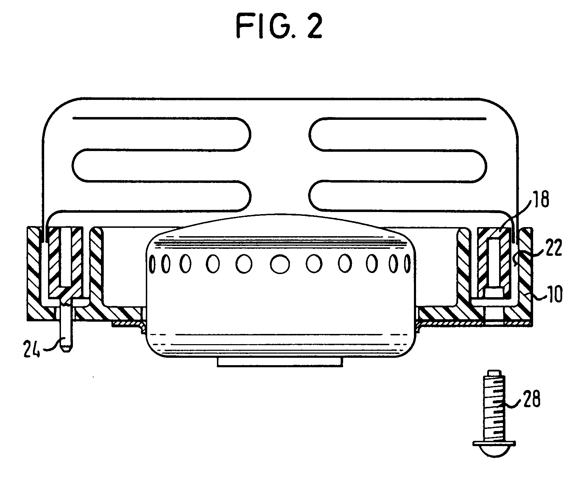

Fig. 2 läßt die Anbindung des Befestigungsrahmens 18 an das Gehäuse 10 erkennen. Im Bereich zwischen den Befestigungszapfen 24 weist der Befestigungsrahmen 18 Öffnungen, z.B. Schlitze, auf, in die selbstschneidende Befestigungsschrauben 28 durch entsprechende Öffnungen im Gehäuse hindurch einschraubbar sind.

Sowohl das Gehäuse 10 als auch der Befestigungsrahmen 18 bestehen aus spritzgegossenem Kunststoff mit Glasfaserverstärkung. Ein vorteilhaftes Material ist Polyamid 6 mit 30 bis 40 Gew.-% Glasfaserverstärkung.

Bei der in den Figuren 1 und 2 gezeigten Bauform ist die durch den Befestigungsrahmen 18 definierte Anbindungsebene zwischen dem Gassack 16 und dem Gehäuse 10 parallel zur Bodenwandung, an welcher die Gasgeneratoren 12, 14 nebeneinander angeordnet sind. Dies ergibt eine kompakte Quaderform des Moduls.

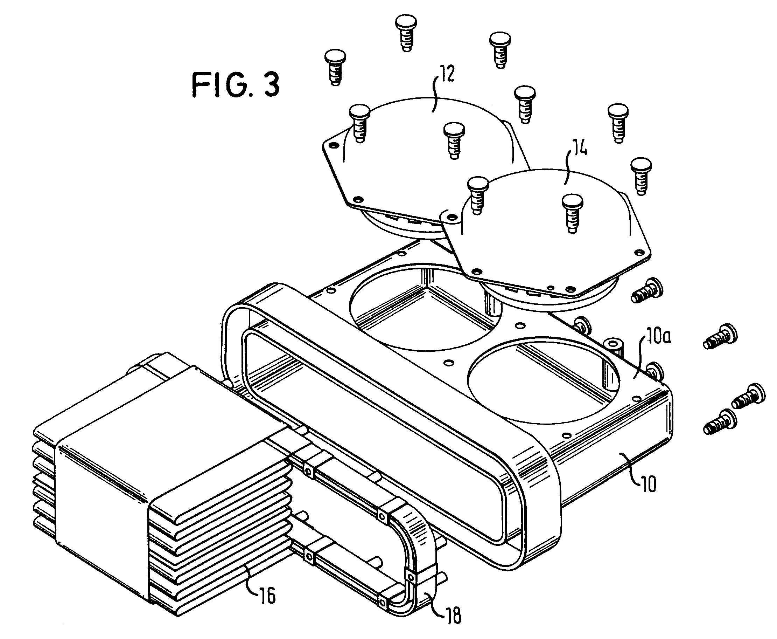

Bei der in Fig. 3 gezeigten Ausführungsform ist hingegen der Wandungsteil 10a des Gehäuses 10, an dem die Gasgeneratoren 12, 14 nebeneinander angeordnet sind, senkrecht zu der durch den Befestigungsrahmen 18 definierten Anbindungsebene zwischen Gehäuse 10 und Gassack 16. Dies ergibt eine flache, gestreckte Bauform des Moduls.

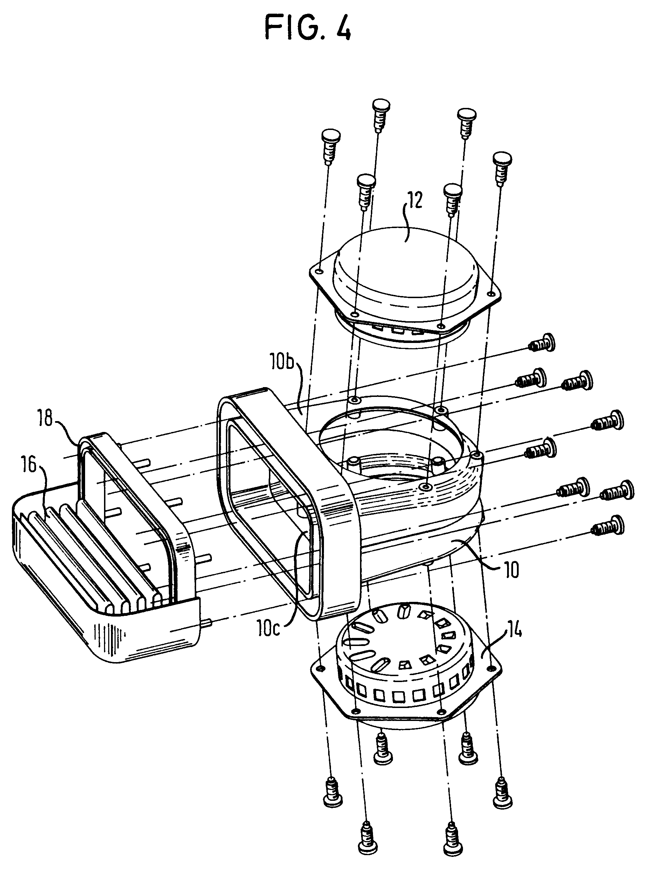

Bei der Ausführungsform nach Fig. 4 sind die Gasgeneratoren 12, 14 an zwei einander gegenüberliegenden Wandungsteilen 10b, 10c des Gehäuses 10 von außen angesetzt und liegen einander somit im Inneren des Gehäuses 10 gegenüber. Diese Bauform zeichnet sich durch geringe Breite bei größerer Tiefe aus.

Die Anbindung des Gassacks an das Gehäuse erfolgt bei allen Ausführungsformen prinzipiell in gleicher Weise und wird daher nicht erneut beschrieben.

## Patentansprüche

1. Gassack-Rückhaltemodul mit einem Gehäuse (10), einer Aufblasvorrichtung, die nach Aktivierung ein Druckgasvolumen bereitstellt, sowie einem gefalteten Gassack (16), der einen an dem Gehäuse festgelegten, eine Einblasöffnung umgebenden Befestigungsabschnitt (16a) aufweist, dadurch gekennzeichnet, daß
- die Aufblasvorrichtung zwei zumindest weitgehend gleiche Gasgeneratoren (12, 14) aufweist;
- die Gasgeneratoren (12, 14) an einem Wandungsteil des allgemein kastenförmigen Gehäuses (10) angeordnet und befestigt sind; und
- der Befestigungsabschnitt (16a) des Gassack (16) mittels eines Befestigungsrahmens (18), der in einen umlaufenden Kanal (22) am Gehäuse (10) eingesetzt ist, an das Gehäuse angebunden ist.

2. Gassack-Rückhaltemodul nach Anspruch 1, dadurch gekennzeichnet, daß das Gehäuse (10) mit den Gasgeneratoren (12, 14) einerseits und der Befestigungsrahmen (18) mit dem gefalteten Gassack (16) andererseits zwei vormontierte Baugruppen bilden.

3. Gassack-Rückhaltemodul nach einem der vorstehenden Ansprüche, dadurch gekennzeichent, daß der Befestigungsrahmen (18) Befestigungszapfen (24) aufweist, welche in dem Befestigungsabschnitt (16a) ausgebildete Öffnungen druchqueren.

4. Gassack-Rückhaltemodul nach einem der vorstehenden Ansprüche, dadurch gekennzeichnet, daß der Befestigungsrahmen (18) mittels selbstschneidender Schrauben (28) am Gehäuse (10) befestigt ist.

5. Gassack-Rückhaltemodul nach einem der vorstehenden Ansprüche, dadurch gekennzeichnet, daß das Gehäuse (10) und der Befestigungsrahmen (18) aus einem Gußmaterial, insbesondere aus glasfaserverstäktem Kunststoff, bestehen und durch Spritzguß hergestellt sind.

6. Gassack-Rückhaltemodul nach einem der vorstehenden Ansprüche, dadurch gekennzeichnet, daß die Gasgeneratoren (12, 14) je einen Befestigungsflansch (12a, 14a) aufweisen, der von außen an den Boden des Gehäuses (10) angesetzt ist und durch Öffnungen (20, 21) im Boden des Gehäuses in dessen Innenraum ragen.

7. Gassack-Rückhaltemodul nach einem der Ansprüche 1 bis 5, dadurch gekennzeichnet, daß der Wandungsteil des Gehäuses (10), an dem die Gasgeneratoren (12, 14) angeordnet sind, quer zu der durch den Befestigungsrahmen (18) definierten Anschlußebene zwischen Gehäuse und Gassack (16) orientiert ist.

8. Gassack-Rückhaltemodul nach Anspruch 7, dadurch gekennzeichnet, daß die Gasgeneratoren (12, 14) von außen an den Wandungsteil angesetzt sind und durch Öffnungen darin in den Innenraum des Gehäuses (10) ragen.

9. Gassack-Rückhaltemodul nach Anspruch 8, dadurch gekennzeichnet, daß die an zwei einander gegenüberliegenden Wandungsteilen des Gehäuses von außen befestigten Gasgeneratoren (12, 14) einander gegenüberliegend angeordnet sind.
